# FASCICULE DE BREVET EUROPEEN

(11) **EP 1 910 165 B1**
(45) Date de publication et mention de la délivrance du brevet: **07.01.2009**
(21) Numéro de dépôt: 06778809.1
(22) Date de dépôt: 07.07.2006
(51) Int. Cl.: B64D 11/00

(54) **CLOISON DE SEPARATION DANS UNE CABINE D'AERONEF**
FLUGZEUGKABINENTRENNWAND
AIRCRAFT CABIN PARTITION

(30) Priorité: 12.07.2005 FR 0507442
(43) Date de publication de la demande: 16.04.2008
(73) Titulaire: Airbus, 31700 Blagnac Cédex (FR)
(72) Inventeur: BOCK, Thomas-Mathias, F-31330 Grenade-sur-Garonne (FR)
(74) Mandataire: Hartmann, Jean-Luc
(86) Numéro de dépôt international: PCT/FR2006/001634
(87) Numéro de publication internationale: WO 2007/006938

(56) Documents cités:
- US-A- 4 911 219
- US-B1- 6 523 779

## Description

La présente invention concerne une paroi de séparation dans une cabine d'aéronef.

Dans une cabine d'aéronef, on trouve parfois des sièges de types différents. Ces sièges différents permettent d'offrir aux passagers divers niveaux de confort dans la cabine de l'aéronef. Dans de telles cabines, on trouve alors généralement trois niveaux de confort définissant trois classes de confort croissant : la classe économique, la classe affaires et la première classe. Les sièges d'une même classe sont généralement regroupés au sein d'un compartiment.

De manière connue, les compartiments dans une cabine d'aéronef sont séparés les uns des autres par une cloison de séparation transversale, cf US 4 911 219. Ces cloisons doivent être réalisées en respectant les différentes règles de sécurité. Ainsi, il convient notamment de pouvoir évacuer rapidement l'aéronef en cas de danger. Les couloirs de la cabine de l'aéronef ne doivent donc pas comporter d'obstacles. Les cloisons de séparation de l'art antérieur comportent ainsi généralement des parois rigides présentant la largeur de deux ou trois sièges et disposées derrière une rangée transversale de sièges. Entre ces parois, au niveau du (ou des) couloir(s), un rideau, généralement textile, réalise la séparation entre les compartiments.

Avec une telle cloison de séparation, l'isolement entre les compartiments est imparfait. Ceci est dû en partie à l'utilisation de rideaux souples pour réaliser la séparation au niveau des couloirs mais également à la forme des parois rigides. En effet, pour permettre l'ouverture des coffres à bagages, placés en hauteur, la partie supérieure des parois rigides est découpée. Ainsi au cours d'un vol, lorsque les coffres à bagages sont fermés, une découpe apparaît dans la paroi de séparation au niveau de chaque coffre à bagages.

La présente invention a alors pour but de fournir une paroi (et une cloison) de séparation permettant de réaliser un bon isolement entre des compartiments de cabine d'aéronef, même au niveau de coffres à bagages.

A cet effet, elle propose une paroi de séparation pour cabine d'aéronef comportant un panneau vertical rigide et fixe.

Selon l'invention, cette paroi comporte en outre un élément mobile entre une position déployée dans laquelle l'élément mobile fait saillie au-delà des contours du panneau rigide et fixe et une position rétractée dans laquelle la partie en saillie de l'élément mobile est escamotée au moins partiellement par rapport aux contours du panneau rigide et fixe. Pour une meilleure liaison entre l'élément mobile et un coffre à bagages, l'élément mobile présente un bord supérieur sur lequel coulisse un butoir destiné à venir au contact d'une porte de coffre à bagages.

Une telle paroi de séparation peut s'adapter à des contours "variables" tels ceux définis par un coffre à bagages qui peut être ouvert ou fermé. Ainsi, la position déployée de l'élément mobile correspond par exemple à la position fermée d'un coffre à bagages sous lequel se trouve la paroi de séparation et la position rétractée correspond à la position ouverte de ce coffre à bagages.

Dans une première forme de réalisation, l'élément mobile est monté pivotant autour d'un axe horizontal. Il s'agit ici d'un mouvement simple qui permet généralement de bien suivre le mouvement d'ouverture d'un coffre à bagages.

Une forme de réalisation préférée prévoit que l'élément mobile est une lame qui, dans sa position rétractée, est logée au moins partiellement dans une réservation prévue à cet effet dans le panneau rigide et fixe. Ainsi, esthétiquement, on ne voit apparaître que la partie en saillie de l'élément mobile. Dans cette forme préférée, le panneau rigide et fixe comporte par exemple deux faces latérales entre lesquelles vient prendre place la lame mobile, et le guidage de la lame mobile entre sa position déployée et sa position rétractée, et inversement, est assuré par les faces latérales du panneau rigide et fixe. Dans cette variante, la lame mobile est guidée comme une vitre de portière de véhicule automobile.

Pour commander le mouvement de l'élément mobile, il est proposé par exemple que des moyens de rappel précontraignent l'élément mobile vers sa position déployée. De cette manière, cet élément peut suivre le contour "variable". Dans le cas d'une paroi située sous un coffre à bagages, l'élément mobile peut suivre les ouvertures et fermetures de ce coffre.

La présente invention concerne également une cloison de séparation pour cabine d'aéronef comportant au moins une paroi de séparation et un rideau, dans laquelle au moins une paroi de séparation est une paroi telle que décrite ci-dessus. Elle concerne également une cabine d'aéronef et un aéronef, caractérisés en ce qu'ils comportent chacun au moins une telle paroi de séparation.

Des détails et avantages de la présente invention ressortiront mieux de la description qui suit, faite en référence aux dessins schématiques annexés sur lesquels :
La figure 1 représente en perspective une cloison de séparation selon l'invention, et
La figure 2 est une vue partielle de face d'une cabine d'aéronef équipée d'une cloison de séparation selon l'invention.

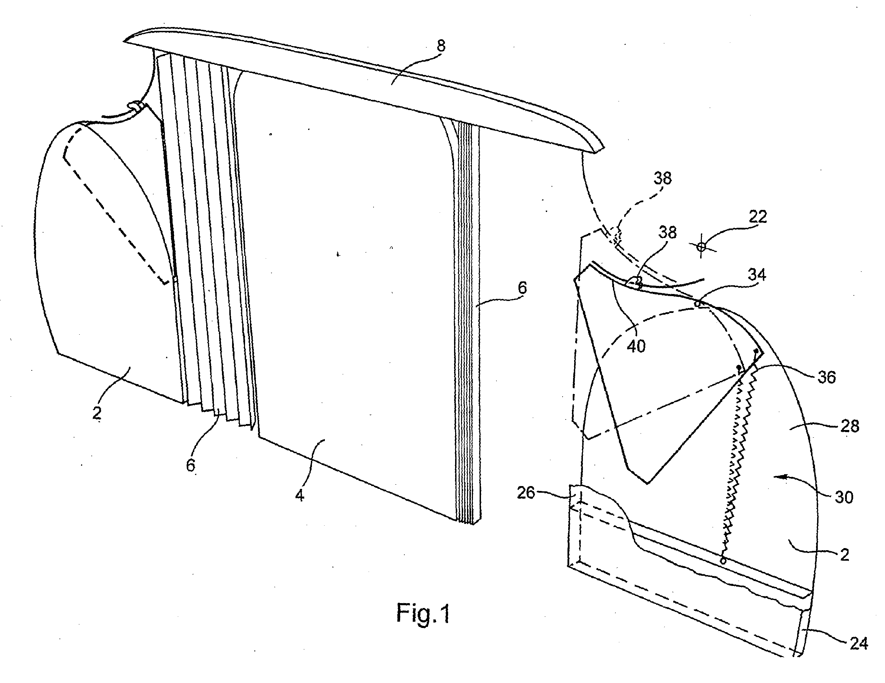

La figure 1 représente une cloison de séparation destinée à prendre place dans une cabine d'aéronef. Cette cloison est destinée à être disposée transversalement dans cette cabine. Cette cloison de séparation comporte notamment deux parois de séparation latérale 2, une paroi de séparation centrale 4, deux rideaux 6 et un bandeau 8 supérieur. Tous ces éléments sont placés sensiblement dans un même plan que l'on supposera dans la suite de la description comme étant vertical.

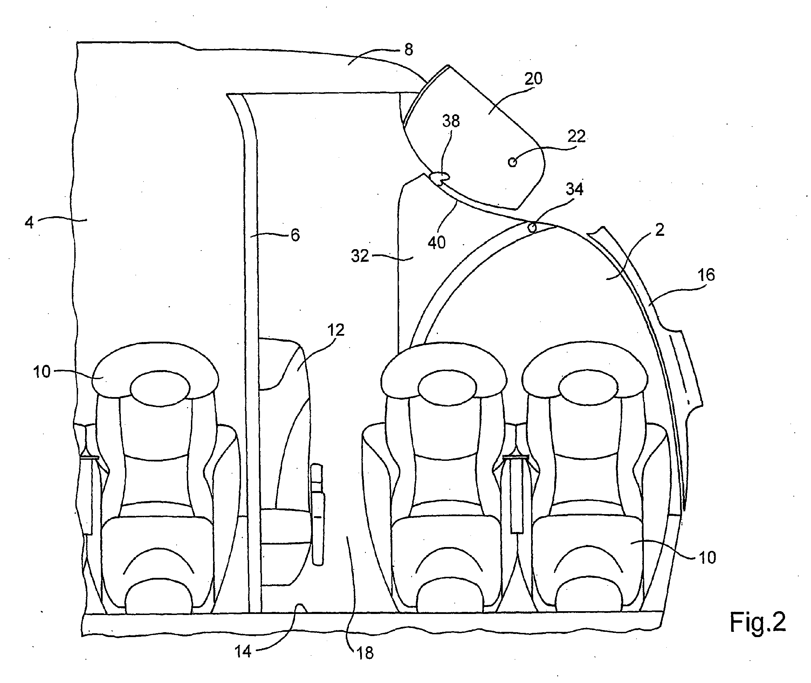

Comme le montre la figure 2, cette cloison de séparation est destinée à isoler l'un de l'autre deux compartiments de la cabine d'aéronef. Dans l'exemple de la figure 2, la cloison de séparation est disposée entre un compartiment de classe affaires équipé de sièges convertibles 10 et un compartiment de classe économique équipé de sièges à dossier inclinable 12. La cloison de séparation s'étend depuis le sol 14 de la cabine d'aéronef jusqu'à son plafond et d'une paroi latérale 16 de cette cabine jusqu'à la paroi latérale opposée.

La paroi de séparation centrale 4 est une paroi fixe rigide. Elle correspond à une paroi de séparation telle celles que l'on connaît de l'art antérieur. Elle est disposée entre deux rangées de sièges successives. Dans la cabine d'aéronef considérée ici à titre d'exemple, deux couloirs 18 (dont seul un est représenté sur la figure 2) s'étendent longitudinalement dans la cabine de l'aéronef pour permettre l'accès aux sièges de cette cabine. La paroi de séparation centrale 4 est délimitée par ces deux couloirs 18. L'isolement entre les deux compartiments de la cabine d'aéronef séparés par la cloison de séparation représentée se fait au niveau des couloirs par les rideaux 6. On trouve ainsi un tel rideau 6 de part et d'autre de la paroi de séparation centrale 4. Sur la figure 1, un premier rideau 6 est montré dans sa position tirée dans laquelle il forme une séparation entre les deux compartiments et un autre rideau est montré dans sa position pliée dans laquelle le rideau 6 laisse libre le passage entre les deux compartiments.

Le bandeau 8 est disposé au-dessus de la paroi de séparation centrale 4 et des rideaux 6. Ces derniers peuvent être par exemple portés par le bandeau 8. Une glissière peut ainsi être prévue aux extrémités de ce bandeau 8 sur la face inférieure de celui-ci.

Ce bandeau est par exemple un bandeau lumineux sur lequel peuvent apparaître des pictogrammes (non représentés). Ces pictogrammes peuvent par exemple indiquer aux passagers l'état libre ou occupé d'une toilette, rappeler éventuellement une interdiction de fumer, demander aux passagers d'attacher leur ceinture, etc....

La présente invention concerne plus particulièrement les parois de séparation latérales pour la configuration de cabine représentée aux dessins. Ces parois de séparation latérales 2 se trouvent disposées contre les parois latérales 16 de la cabine d'aéronef. Du côté opposé à cette paroi latérale 16 de cabine, elles sont délimitées par un couloir 18. Les parois de séparation latérales 2 représentées reposent sur le sol 14 de la cabine d'aéronef. En partie supérieure, ces parois de séparation latérales 2 s'étendent non pas jusqu'au plafond de la cabine d'aéronef mais jusqu'à un coffre à bagages 20. Dans l'exemple représenté, ce dernier est monté pivotant autour d'un axe horizontal longitudinal. Sur les figures, cet axe est symbolisé par un premier point de pivotement 22. Ce point correspond à l'intersection entre l'axe de pivotement horizontal et le plan vertical recevant la cloison de séparation.

Les deux parois de séparation latérales 2 de la figure 1 sont symétriques par rapport à un plan médian vertical de la cabine d'aéronef. Seule l'une de ces parois de séparation latérale 2 sera donc décrite ci-après.

Une paroi de séparation latérale 2, dans sa forme de réalisation préférée, comporte une base 24, une face avant 26 et une face arrière 28. La base 24 repose sur le sol 14 de la cabine d'aéronef. Les faces avant 26 et arrière 28 sont symétriques l'une par rapport à l'autre et définissent entre elles un logement 30. Ce dernier reçoit une lame mobile 32 (alors que la base 24 et les faces avant 26 et arrière 28 sont considérées comme étant fixes).

La forme des faces avant 26 et arrière 28 est telle que lorsque le coffre à bagages 20 est en position ouverte un espace subsiste entre la partie supérieure des faces avant 26 et arrière 28 et le coffre à bagages 20 dans sa position ouverte. La lame mobile 32 vient combler l'ouverture restant entre les faces avant 26 et arrière 28 de la paroi de séparation latérale 2 et le coffre à bagages 20, que celui-ci soit en position fermée ou ouverte.

Dans la forme de réalisation préférée représentée aux dessins, la lame mobile 32 est montée pivotante autour d'un second axe horizontal, parallèle à l'axe de pivotement du coffre à bagages 20. On a représenté sur les figures 1 et 2 un second point de pivotement 34 qui correspond à l'intersection de l'axe de pivotement de la lame mobile 32 avec le plan contenant la cloison de séparation. Dans son mouvement de pivotement, la lame mobile 32 est guidée par les faces avant 26 et arrière 28.

Des moyens sont prévus pour précontraindre la lame mobile 32 dans sa position relevée, en contact avec le coffre à bagages 20. Dans la forme de réalisation représentée, ces moyens comportent un ressort 36 accroché d'une part à la lame mobile 32 et d'autre part à un point fixe, par exemple la base 24 de la paroi de séparation latérale 2, comme représenté sur la figure 1.

Dans la forme de réalisation préférée représentée au dessin, la lame mobile 32 ne vient pas directement au contact du coffre à bagages 20. Un butoir 38 fixé sous le-coffre à bagages assure la liaison entre celui-ci et la lame mobile 32. On remarque sur les dessins que la lame mobile présente une arête supérieure 40 reprenant le contour de la face inférieure du coffre à bagages 20. Lorsque le coffre à bagages 20 s'ouvre, le butoir 38 vient glisser sur l'arête supérieure 40 de la lame mobile 32.

Sur la figure 2, la lame mobile 32 est représentée dans sa position déployée correspondant à la position fermée du coffre à bagages. Cette position déployée est représentée en pointillés sur la figure 1. Sur cette dernière figure, la lame mobile 32 est représentée dans sa position rétractée à l'intérieur du logement 30 en traits pleins. On remarque que la lame mobile 32 n'est que partiellement rétractée dans son logement 30. Dans une autre forme de réalisation, on pourrait prévoir que les faces avant 26 et arrière 28 de la paroi de séparation latérale 2 viennent sensiblement épouser la face inférieure du coffre à bagages 20 lorsque celui-ci est en position ouverte. Dans un tel cas de figure, la lame mobile, dans sa position rétractée, serait entièrement logée dans son logement 30.

Comme on peut le voir sur les dessins, la lame mobile 32 permet de parfaire l'isolation entre deux compartiments d'une cabine d'aéronef. Une cloison de séparation telle que décrite ci-dessus permet de réaliser un bon isolement entre deux compartiments. Elle permet notamment d'avoir une isolation visuelle et phonétique des compartiments. On peut également prévoir des éclairages différents dans deux compartiments voisins séparés par la cloison de séparation selon l'invention.

La cloison de séparation selon l'invention permet de réaliser cet isolement aussi bien lorsque les coffres à bagages sont dans leur position ouverte que fermée.

En outre, la cloison de séparation selon l'invention permet de respecter les règles de sécurité et ne gêne pas notamment l'évacuation des passagers en cas d'urgence.

La présente invention ne se limite pas à la forme de réalisation préférée décrite ci-dessus à titre d'exemple non limitatif. Elle concerne également toutes les variantes de réalisation à la portée de l'homme du métier dans le cadre des revendications ci-après.

Une cloison de séparation selon l'invention peut s'adapter à tous types d'aéronefs. Elle concerne aussi bien des aéronefs monocouloir que des aéronefs comportant plusieurs couloirs. La description faite concerne l'isolement de deux compartiments de classes de confort différentes. Bien entendu, une telle cloison de séparation peut être utilisée pour réaliser deux compartiments d'une seule et même classe de confort ou par exemple pour isoler un compartiment destiné à recevoir des passagers et un autre compartiment destiné par exemple au personnel navigant (cuisine, etc...) ou tout autre type d'espace (espace médicalisé pour rapatriement sanitaire, etc...).

La description ci-dessus décrit un mode de réalisation préféré dans lequel la lame est montée pivotante. Dans cet exemple de réalisation, le mouvement de la lame mobile est adapté au mouvement que l'on rencontre le plus souvent au niveau de coffre à bagages. Il est clair que le mouvement de la lame mobile peut être différent de celui décrit. On peut par exemple prévoir une translation de cette lame dans le cas notamment où le coffre à bagages s'ouvre en se translatant. De même, la lame mobile décrite est guidée entre les faces avant et faces arrière d'une paroi de séparation latérale. On pourrait prévoir une structure dans laquelle la lame mobile ne viendrait pas se loger entre deux faces d'une paroi mais viendrait simplement coulisser ou pivoter (ou tout autre mouvement) le long d'une paroi.

## Revendications

1. Paroi de séparation (2) pour cabine d'aéronef comportant :
- un panneau vertical (24, 26, 28) rigide et fixe, et
- un élément mobile (32) entre une position déployée dans laquelle l'élément mobile (32) fait saillie au-delà des contours du panneau (24, 26, 28) rigide et fixe et une position rétractée dans laquelle la partie en saillie de l'élément mobile (32) est escamotée au moins partiellement par rapport aux contours du panneau (24, 26, 28) rigide et fixe,
**caractérisée en ce que** l'élément mobile (32) présente un bord supérieur (40) sur lequel coulisse un butoir (38) destiné à assurer la liaison entre une porte de coffre à bagages (20) et l'élément mobile (32).

2. Paroi de séparation selon la revendication 1, **caractérisée en ce que** l'élément mobile (32) est monté pivotant autour d'un axe horizontal (34).

3. Paroi de séparation selon l'une des revendications 1 ou 2, **caractérisée en ce que** l'élément mobile (32) est une lame qui, dans sa position rétractée, est logée au moins partiellement dans une réservation (30) prévue à cet effet dans le panneau (24, 26, 28) rigide et fixe.

4. Paroi de séparation selon la revendication 3, **caractérisée en ce que** le panneau rigide et fixe comporte deux faces latérales (26, 28) entre lesquelles vient prendre place la lame mobile (32), et **en ce que** le guidage de la lame mobile (32) entre sa position déployée et sa position rétractée, et inversement, est assuré par les faces latérales (26, 28) du panneau rigide et fixe.

5. Paroi de séparation selon l'une des revendications 1 à 4, **caractérisée en ce que** des moyens de rappel (36) précontraignent l'élément mobile (32) vers sa position déployée.

6. Ensemble comportant d'une part un coffre à bagages avec une porte de coffre à bagages et d'autre part une paroi de séparation selon l'une des revendications 1 à 5, **caractérisée en ce que** le butoir (38) est fixé sur la porte du coffre à bagages (20).

7. Cloison de séparation pour cabine d'aéronef comportant au moins une paroi de séparation (2, 4) et un rideau (6), **caractérisée en ce qu'**au moins une paroi de séparation (2) est une paroi selon l'une des revendications 1 à 5.

8. Cabine d'aéronef, **caractérisée en ce qu'**elle comporte au moins une paroi de séparation (2) selon l'une des revendications 1 à 5.

9. Aéronef, **caractérisé en ce qu'**il comporte au moins une paroi de séparation (2) selon l'une des revendications 1 à 5.

10. Aéronef, **caractérisé en ce qu'**il comporte au moins un ensemble selon la revendication 6.

## Claims

1. An aircraft cabin separation wall (2) comprising:
- a vertical panel (24, 26, 28) that is stiff and fixed, and
- a member (32) that is moveable between an extended position in which the moveable member (32) projects beyond the contours of the stiff fixed panel (24, 26, 28) and a retracted position in which the projecting portion of the moveable member (32) is withdrawn at least partially with respect to the contours of the stiff fixed panel,
**characterized in that** the moveable member (32) has an upper edge (40) on which slides an abutment (38) adapted to provide the connection between a luggage locker door (20) and the moveable member (32).

2. A separation wall according to claim 1, **characterized in that** the moveable member (32) is pivotally mounted about a horizontal axis (34).

3. A separation wall according to one of claims 1 or 2, **characterized in that** the moveable member (32) is a leaf which, in its retracted position, is accommodated at least partially in a recess (30) provided for that purpose in the stiff fixed panel (24, 26, 28).

4. A separation wall according to claim 3, **characterized in that** the stiff fixed panel comprises two side faces (26, 28) between which the moveable leaf (32) comes into place, and **in that** the guiding of the moveable leaf (32) between its extended position and its retracted position, and vice-versa, is provided by the side faces (26, 28) of the stiff fixed panel.

5. A separation wall according to one of claims 1 to 4, **characterized in that** return means (36) bias the moveable member (32) towards its extended position.

6. An assembly comprising a luggage locker with a luggage locker door, and also a separation wall according to one of claims 1 to 5, **characterized in that** the abutment (38) is fixed onto the luggage locker (20).

7. A separation partition for an aircraft cabin comprising at least one separation wall (2, 4) and a curtain (6), **characterized in that** at least one separation wall (2) is a wall according to one of claims 1 to 5.

8. An aircraft cabin, **characterized in that** it comprises at least one separation wall (2) according to one of claims 1 to 5.

9. An aircraft, **characterized in that** it comprises at least one separation wall (2) according to one of claims 1 to 5.

10. A aircraft, **characterized in that** it comprises at least one assembly according to claim 6.

## Patentansprüche

1. Flugzeugkabinentrennwand (2), umfassend:
- eine starre und feststehende vertikale Tafel (24, 26, 28) und
- ein Element (32), das zwischen einer ausgefahrenen Stellung, in der das bewegliche Element (32) über die Umrisse der starren und feststehenden Tafel (24, 26, 28) hinausragt, und einer eingezogenen Stellung beweglich ist, in der der vorstehende Teil des beweglichen Elements (32) bezüglich der Umrisse der starren und feststehenden Tafel (24, 26, 28) mindestens teilweise versenkt ist,
**dadurch gekennzeichnet, dass** das bewegliche Element (32) einen oberen Rand (40) aufweist, auf dem ein Anschlag (38) gleitet, der dazu bestimmt ist, die Verbindung zwischen einer Gepäckfachklappe (20) und dem beweglichen Element (32) zu gewährleisten.

2. Trennwand nach Anspruch 1, **dadurch gekennzeichnet, dass** das bewegliche Element (32) um eine horizontale Achse (34) verschwenkbar montiert ist.

3. Trennwand nach einem der Ansprüche 1 oder 2, **dadurch gekennzeichnet, dass** das bewegliche Element (32) ein Blatt ist, das in seiner eingezogenen Stellung mindestens teilweise in einer hierzu in der starren und feststehenden Tafel (24, 26, 28) vorgesehenen Aussparung (30) untergebracht ist.

4. Trennwand nach Anspruch 3, **dadurch gekennzeichnet, dass** die starre und feststehende Tafel zwei Seitenflächen (26, 28) umfasst, zwischen die die bewegliche Lamelle (32) eintritt, und dass die Führung der beweglichen Lamelle (32) zwischen ihrer ausgefahrenen Stellung und ihrer eingezogenen Stellung und umgekehrt durch die Seitenflächen (26, 28) der starren und feststehenden Tafel gewährleistet wird.

5. Trennwand nach einem der Ansprüche 1 bis 4, **dadurch gekennzeichnet, dass** Rückholmittel (36) das bewegliche Element (32) in seine ausgefahrene Stellung vorbelasten.

6. Einheit, umfassend einerseits ein Gepäckfach mit einer Gepäckfachklappe und andererseits eine Trennwand nach einem der Ansprüche 1 bis 5, **dadurch gekennzeichnet, dass** der Anschlag (38) an der Klappe des Gepäckfachs (20) befestigt ist.

7. Flugzeugkabinentrennwand, umfassend mindestens eine Trennwand (2, 4) und einen Vorhang (6), **dadurch gekennzeichnet, dass** mindestens eine Trennwand (2) eine Wand nach einem der Ansprüche 1 bis 5 ist.

8. Flugzeugkabine, **dadurch gekennzeichnet, dass** sie mindestens eine Trennwand (2) nach einem der der Ansprüche 1 bis 5 umfasst.

9. Flugzeug, **dadurch gekennzeichnet, dass** es mindestens eine Trennwand (2) nach einem der Ansprüche 1 bis 5 umfasst.

10. Flugzeug, **dadurch gekennzeichnet, dass** es mindestens eine Einheit nach Anspruch 6 umfasst.
